# EUROPEAN PATENT SPECIFICATION

(11) **EP 2 014 487 B1**
(45) Date of publication and mention of the grant of the patent: **15.08.2012**
(21) Application number: 07741984.4
(22) Date of filing: 19.04.2007
(51) Int. Cl.: B60C 13/04, B60C 13/00

(54) **PNEUMATIC TIRE**
LUFTREIFEN
BANDAGE PNEUMATIQUE

(30) Priority: 21.04.2006 JP 2006117678
(43) Date of publication of application: 14.01.2009
(73) Proprietor: The Yokohama Rubber Co., Ltd., Minato-ku Tokyo 105-8685 (JP)
(72) Inventor: TAKEUCHI, Mizuki c/o The Yokohama Rubber Co., Ltd., Hiratsuka-shi Kanagawa 254-8601 (JP)
(74) Representative: HOFFMANN EITLE
(86) International application number: PCT/JP2007/058548
(87) International publication number: WO 2007/123184

(56) References cited:
- EP-A- 0 726 173
- DE-U1- 8 023 409
- JP-A- 4 129 808
- JP-A- 08 258 518
- JP-A- 2003 200 717
- JP-A- 2005 178 638
- US-A- 4 144 921
- US-A- 4 317 479
- US-B1- 6 983 911

## Description

### TECHNICAL FIELD

The present invention relates to a pneumatic tire.

### BACKGROUND ART

Generally, the service life of a pneumatic tire is determined on the basis of a wearing state of a tread surface. For the determination, a wear indicator in a form of a projection is provided at a bottom of a groove on a tread portion. Specifically, the wear indicator has a length shorter than the groove depth. The service life of the tire is judged to be ended, when the wearing of the tread reaches the wear indicator. Alternatively, a particular projection is proposed to be provided on the surface of a side protector, the projection dedicated to the visual check on the wearing state of a side wall portion (see, for example, Japanese patent application Kokai publication No. 2003-200716).

However, the service life of the pneumatic tire is not determined solely on the basis of the wearing of its tread. Depending on the use condition, a side portion may be ruptured before the tread reaches the wear limit. For example, even though the tread is worn out very little, if other constituents such as the side portion have been deteriorated, the deterioration may lead to the rupturing of the tire before the tread reaches the wear limit. Nevertheless, the recognition has been established that the service life of a conventional tire is determined on the basis of the wearing of its tread. Accordingly, the determination on the service life based on the time deterioration of other constituent members of the tire as described above has not been considered at all.

Reference is also made to JP 04 129808 A.

The present invention, in common with JP 04 129808 A, relates to a pneumatic tire comprising: a deterioration indicator formed by arranging two or more areas in a row, wherein time taken before a crack occurrence due to an environmental factor and/or a use factor is different among two or more areas, and the deterioration indicator is disposed in an exposed portion, other than a tread surface, of the tire

### SUMMARY OF THE INVENTION

According to a first aspect of the invention, the pneumatic tire is characterized in that the deterioration indicator is formed by arranging, in a row, two or more rubber composition materials having different rubber compositions continuously in a circumferential direction of the tire.

According to a second aspect of the invention, the pneumatic tire is characterized in that the deterioration indicator is formed of a concave portion having a conical shape that is divided at a plane parallel to its axial direction, and the two or more areas are arranged in a circumferential direction of the tire in a row along said axial direction to have different curvature radii.

According to a third aspect of the invention, the pneumatic tire is characterized in that the areas of the deterioration indicator are formed by arranging, in a row, two or more independent concave portions having approximately identical diameters to each other on the surface of the tire, but different depths and different curvature radii at the bottoms of the concave portions, intermittently in the circumferential direction of the tire.

Embodiments of the present invention can provide a pneumatic tire whose deterioration over time can be visually checked from its external appearance.

Embodiments of the present invention can provide a pneumatic tire in which the deterioration of a tire material over time can be visually checked from its external appearance to determine the service life of the tire.

with embodiments of the present invention, by visually checking the cracks that sequentially occur in the areas of the deterioration indicator during the use of the tire, the remaining service life of the tire can be easily known. Therefore, in accordance with the remaining service life, it is possible to prevent an accident in advance by replacing the tire with a fresh tire regardless of the amount of worn tread.

### BRIEF DESCRIPTION OF THE DRAWINGS

To enable a better understanding of the present invention and to show how the same may be put into effect, reference will now be made, by way of example only, to the accompanying drawings.
[Fig. 1] Fig. 1 is a semi-sectional view for exemplifying a pneumatic tire according to the present invention in a tire meridian direction thereof.
[Fig. 2] Fig. 2 is an explanatory drawing for exemplifying a deterioration indicator in the pneumatic tire according to a first embodiment of the present invention.
[Fig. 3] Fig. 3 is an explanatory drawing for exemplifying a deterioration indicator in a pneumatic tire described herein, not forming an embodiment of the present invention.
[Fig. 4] Fig. 4 is an explanatory drawing for exemplifying a deterioration indicator in the pneumatic tire according to a second embodiment of the present invention. Fig. 4(a) is a plan view of the deterioration indicator which is disposed to a side wall portion; Fig. 4 (b) is a sectional view taken along a line pointed by 4b-4b arrows in Fig. 4(a); and Fig. 4(c) is a sectional view taken along a line pointed by 4c-4c arrows in Fig. 4(a).
[Fig. 5] Fig. 5 is an explanatory drawing for exemplifying a deterioration indicator in the pneumatic tire according to a third embodiment of the present invention. Fig. 5(a) is a plan view of the deterioration indicator which is disposed to a side wall portion; and Figs. 5(b1) to 5(b4) are sectional views taken along lines pointed by b1-b1 to b4-b4 arrows in Fig. 5 (a).

### Description of reference numerals

1 tread portion
7 deterioration indicator
8 concave portion

### DETAILED DESCRIPTION OF THE DRAWINGS

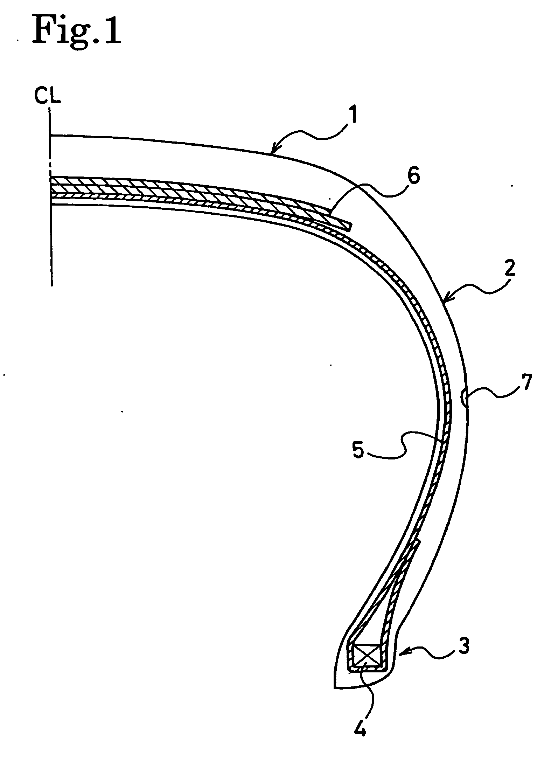

Fig. 1 is a semi-sectional view, in a tire meridian direction, for exemplifying an embodiment for a pneumatic tire according to the present invention.

In Fig. 1, reference numeral 1 denotes a tread portion, reference numeral 2 denotes a side wall portion, and reference numeral 3 denotes a bead portion. A carcass layer 5 is bridged between a right-and-left pair of bead cores 4 respectively buried in the bead portions 3. A pair of belt layers 6 are disposed on each other, in a vertical direction, on the outer circumferential side of the carcass layer 5, so that the belt layers 6 are wound around a tire. A deterioration indicator 7 to be described in detail later is disposed on the surface of the side wall portion 2.

The deterioration indicator 7 is a display unit formed by arranging two or more areas of the tire materials in a row, the tire materials having different timings of crack occurrences from each other due to an environmental factor and/or a use factor. It is preferable that the crack occurrences in these areas be adjusted in a way that a crack occurs a little earlier in these areas than in the tire main body. It is more preferable that the areas be aligned in an order of crack occurrence timings. Examples of the environmental factor and/or the use factor involved in the time deterioration of the tire material are heat, light, oxygen, ozone, distortion, and the like. At least one factor selected from these is regarded as the environmental factor and/or the use factor.

The deterioration indicator is provided to an exposed portion, other than the tread surface, of the tire. More specifically, it is provided to a spot, in the exposed portion, that can be visually observed easily. The specific configuration of the deterioration indicator is roughly classified as follows: (1) the deterioration indicator made of a combination of multiple kinds of rubber composition materials in which proportions of two or more kinds of rubber ingredients blended are changed in a predetermined fashion; and (2) the deterioration indicator formed of multiple concave portions having curvature radii of various sizes, while the rubber compositions of the concave portions may be identical to each other. In any case of the above (1) and (2), the areas of those different rubber composition materials or the areas of the concave portions having the different curvature radii may be continuously or intermittently aligned on the exposed tire portion. The spot to be provided on the exposed tire portion is not particularly limited as long as the spot is not on the tread surface. However, the spot is preferably on the surface of the side wall portion or the bead portion, and more preferably on the surface of the side wall portion. Particularly, when provided in the side wall portion, the deterioration indicator should be in the side wall portion at an area of maximum width of the tire, which is likely to be influenced by the environmental factor and/or the use factor to a great extent.

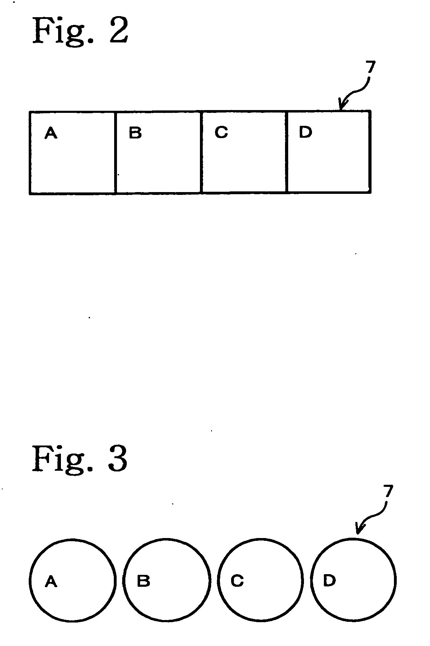

Fig. 2 exemplifies the deterioration indicator made of the multiple kinds of rubber composition materials as described in the above (1). Multiple areas A to D constituting the deterioration indicator 7 are continuously aligned, in contact with each other, in an order of A, B, C, and D. In this sequential order, cracks occur at the earliest time in the area A, and at the latest time in the area D.

The rubber composition material of each area A to D is not particularly limited as long as a crack thereof occurs earlier due to the environmental factor and/or the use factor than the rubber material of the tire main body. For example, it is possible to use the rubber composition material obtained by appropriately adding, for example, a compounding agent such as carbon black, process oil and vulcanizer to the main ingredient such as diene rubbers (NR, IR, BR, SBR, and the like), ethylene/propylene copolymer rubbers, styrene elastomers, and the like.

Regarding the alignment of the areas A to D of the different rubber composition materials, the areas A to D may be disposed intermittently as shown in Fig. 3 instead of continuously disposing the areas A to D as shown in Fig. 2. The intermittent alignment can make it easy to visually observe the presence of any crack due to the time deterioration at each area. Furthermore, it is preferable to align the areas in the order of crack occurrence timings, but not to align randomly.

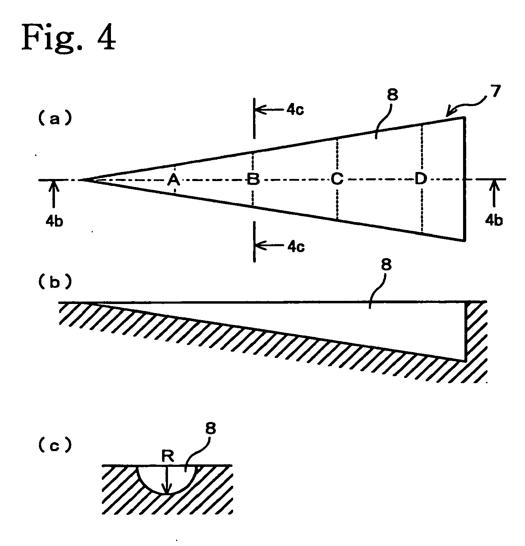

Fig. 4 shows the deterioration indicator formed of multiple concave portions having various curvature radii as in the above (2).

The deterioration indicator 7 in Fig. 4 is formed of concave portion 8 having a conical shape that is divided at a plane parallel to its axial direction. The diameter of the cone is smaller toward the apex, and larger toward the bottom gradually. Thus, a curvature radius R in the area A is the smallest, and a curvature radius R in the area D is the largest. Since a stress is likely to concentrate on a smaller curvature radius R, a crack occur in the area A first, and sequentially in the areas B, C, and D in this order. Additionally, the shape of the concave portion is not limited to the divided conical shape, and may be obtained by dividing an ellipsoid, rugby ball-like or oval-shaped object into half.

Incidentally, since the concave portion aims to adjust the crack occurrence timings by the difference among the curvature radii, the spot forming the concave portion may be made of the rubber composition material identical to or different from that of the tire main body.

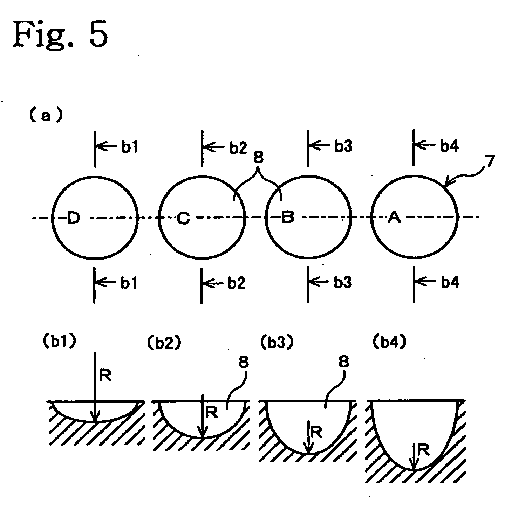

Fig. 4 shows the case where the concave portions having different curvature radii are continuously disposed. Alternatively, two or more independent concave portions 8 with bottoms of different curvature radii R may be intermittently arranged in a row as shown in Fig. 5. In this example, parts of a sphere or ellipsoid, which constitute the areas A to D, have approximately identical diameters to each other on the surface of the tire, but the curvature radii and the depths are different from each other. These curvatures are formed in a way that the curvature radius R of the bottom of the area A is the smallest, and the curvature radius R of the bottom of the area D is the largest. Meanwhile, the concave portion may have a shape obtained by dividing the sphere into half at the plane including the diameter of the sphere, or a shape obtained by dividing the ellipsoid into half at the plane including the major axis or the minor axis of the ellipsoid. Alternatively, the concave portion may have a shape obtained by dividing the sphere or the ellipsoid at any plane that is offset from the aforementioned planes.

In any of the cases described with reference to Figs. 2 to 5, the areas A to D are preferably aligned in the circumferential direction of the tire.

Hereinafter, the present invention will be described by citing Examples. However, the scope of the present invention, which is defined by the appended claims, is not limited to these Examples.

### EXAMPLES

### Example 1

A pneumatic tire having the tire structure shown in Fig. 1 was manufactured with a tire size of 275/80R22.5, and with a deterioration indicator formed of the areas A to D having the following configurations in the side wall portion at the maximum tire width area. The area D had a rubber composition with the blending ratio of the following rubber ingredients being NR/BR=40/60, which was the same as the rubber composition of the side wall portion. Each of the areas C, B and A had a rubber composition in which only the blending ratio (NR/BR) of the rubber ingredients was different from the blending ratios of the others as shown in Table 1. These areas were aligned in a manner to cause cracks to occur in an order where cracks occur at the earliest time in the area A and at the latest time in the area D.

The pneumatic tire was subjected to road tests by two users M and N with substantially the same average running distances. Then, a status of crack occurrences in the areas A to D of the deterioration indicator and a residual strength of the tire were evaluated in the following measurement method. The result is shown in Table 1.

### [Rubber composition]

- NR (natural rubber STR20); 40 parts by weight
- BR (polybutadiene rubber, Nipol BR1220 available from ZEON CORPORATION); 60 parts by weight
- HAF-class carbon black (SEAST N available from TOKAI CARBON CO., LTD.); 40 parts by weight
- Zinc oxide (zinc oxide JIS grade 3 available from SEIDO CHEMICIAL INDUSTRY CO., LTD.); 3 parts by weight
- Stearic acid (beads stearic acid NY available from NOF CORPORATION); 1.5 parts by weight
- Antioxidant (6PPD available from Flexsys Inc.); 4 parts by weight
- Softener (aromatic oil Desolex No. 3 available from SHOWA SHELL SEKIYU K.K.); 6 parts by weight
- Sulfur (Golden flower sulfur powder available from TSURUMI CHEMICAL INDUSTRY CO., LTD.); 1.5 parts by weight
- Vulcanization accelerator (NOCCELER NS available from OUCHI SHINKO CHEMICAL INDUSTRIAL CO., LTD.); 0.75 parts by weight

### [Status of crack occurrences in deterioration indicator]

The durations of the road tests were set 6 months, 12 months, 24 months and 36 months. The crack occurrences in the areas A to D of the deterioration indicator were visually evaluated for each duration.

### [Residual strength of tire]

The tires after undergoing each test duration were subjected to a drum test under the condition where the tire supposedly having residual grooves of 5 mm or deeper was buffed until 5 mm and the speed was set to 50 km/h and the load of 150% relative to the standard load was applied to the tire. The result was represented by an index on the basis of a breaking distance run using a fresh tire as 100, while the residual grooves of the fresh tire had been buffed to 5 mm and had been subjected to the drum test in the same condition as above. Thereby, a residual strength of the tire after the test was determined. The lower value of the residual strength indicates the progressed time deterioration.

**[Table 1]**

| | | Status of crack occurrences in deterioration indicator | | | | Residual strength of tire [%] |
|---|---|---|---|---|---|---|
| | | Area A | Area B | Area C | Area D | |
| Rubber composition NR/BR | | 100/0 | 80/20 | 60/40 | 40/60 | |
| User M | Elapsed months 6 months | present | absent | absent | absent | 92 |
| | 12 months | present | present | absent | absent | 75 |
| | 24 months | present | present | present | absent | 44 |
| | 36 months | present | present | present | present | 9 |
| User N | Elapsed months 6 months | present | absent | absent | absent | 95 |
| | 12 months | present | absent | absent | absent | 87 |
| | 24 months | present | present | absent | absent | 69 |
| | 36 months | present | present | present | absent | 43 |

From the result in Table 1, it was found that the residual strengths of the tires were substantially identical to each other, irrespective of the users and the usages, as long as the statuses of the crack occurrences in the deterioration indicator were substantially identical to each other.

### Example 2

A pneumatic tire having a tire structure shown in Fig. 1 was manufactured with a tire size of 275/80R22.5, and with the deterioration indicator of Fig. 4 formed in the circumferential direction of the tire and in the side wall portion at the maximum tire width area. The deterioration indicator was formed of the concave portion obtained by dividing a cone into half in which the areas A, B, C and D were formed in an increasing order of the curvature radii of the groove bottoms from 3 mm, 6 mm, 9 mm and 12 mm, respectively. Note that the rubber composition of the side wall portion was the same as the rubber composition of the side wall portion in Example 1.

The obtained pneumatic tire was subjected to road tests by two users P and Q with substantially the same average running distances. Then, a status of crack occurrences in the areas A to D of the deterioration indicator and a residual strength of the tire were evaluated in the same measurement method as that in Example 1. The result is shown in Table 2.

**[Table 2]**

| | | Status of crack occurrences in deterioration indicator | | | | Residual strength of tire [%] |
|---|---|---|---|---|---|---|
| | | Area A | Area B | Area C | Area D | |
| Curvature radius [mm] | | 3 | 6 | 9 | 12 | |
| User P | Elapsed months 6 months | present | absent | absent | absent | 89 |
| | 12 months | present | present | absent | absent | 66 |
| | 24 months | present | present | present | absent | 39 |
| | 36 months | present | present | present | present | 11 |
| User Q | Elapsed months 6 months | absent | absent | absent | absent | 95 |
| | 12 months | present | absent | absent | absent | 86 |
| | 24 months | present | present | absent | absent | 70 |
| | 36 months | present | present | present | absent | 48 |

From the result in Table 2, it was found that the residual strengths of the tires were substantially identical to each other, irrespective of the users and the usages, as long as the statuses of the crack occurrences in the deterioration indicators were substantially identical to each other.

Additionally, from the results in Table 1 and Table 2, it was confirmed that it was possible to visually observe the progress of the time deterioration of the tire easily by checking the deterioration indicator. Moreover, it was found that, even in a case where a sign of deterioration was not recognized from the surface of the tire, it was possible to estimate the progress of the time deterioration as well as the residual strength when the deterioration indicator showed a certain level.

## Claims

1. A pneumatic tire comprising:
a deterioration indicator (7) formed by arranging two or more areas in a row, wherein
time taken before a crack occurrence due to an environmental factor and/or a use factor is different among two or more areas, and
the deterioration indicator (7) is disposed in an exposed portion, other than a tread surface, of the tire, **characterized in that**
the deterioration indicator (7) is formed by arranging, in a row, two or more rubber composition materials having different rubber compositions continuously in a circumferential direction of the tire.

2. The pneumatic tire according to claim 1, wherein the deterioration indicator (7) is formed by arranging, in a row, two or more concave portions (8) having different curvature radii continuously in the circumferential direction of the tire.

3. The pneumatic tire according to claim 2, wherein the two or more concave portions having different curvature radii are formed to have shapes each obtained by dividing a cone at a plane parallel to its axial direction.

4. A pneumatic tire comprising:
a deterioration indicator (7) formed by arranging two or more areas in a row, wherein
time taken before a crack occurrence due to an environmental factor and/or a use factor is different among two or more areas, and
the deterioration indicator (7) is disposed in an exposed portion, other than a tread surface, of the tire, **characterized in that**,
the deterioration indicator (7) is formed of a concave portion (8) having a conical shape that is divided at a plane parallel to its axial direction, and
the two or more areas are arranged in a circumferential direction of the tire in a row along said axial direction to have different curvature radii.

5. A pneumatic tire comprising:
a deterioration indicator (7) formed by arranging two or more areas in a row, wherein
time taken before a crack occurrence due to an environmental factor and/or a use factor is different among two or more areas, and
the deterioration indicator (7) is disposed in an exposed portion, other than a tread surface, of the tire, **characterized in that**
the areas of the deterioration indicator (7) are formed by arranging, in a row, two or more independent concave portions (8) having approximately identical diameters to each other on the surface of the tire, but different depths and different curvature radii at the bottoms of the concave portions, intermittently in the circumferential direction of the tire.

6. The pneumatic tire according tc claim 4 or 5, wherein the areas of the deterioration indicator (7) are formed by two or more rubber composition materials having different rubber compositions.

7. The pneumatic tire according to claim 2 or 5, wherein the two or more concave portions (8) having different curvature radii are formed by aligning parts of at least two kinds of any one of a sphere and an ellipsoid.

8. The pneumatic tire according to any one of claims 1 to 7, wherein at least one of the environmental factor and the use factor is one selected from heat, light, oxygen, ozone, and distortion.

9. The pneumatic tire according to any one of claims 1 to 8, wherein the deterioration indicator (7) is disposed in an area of maximum width of the tire.

10. The pneumatic tire according to any one of claims 1 to 9, wherein the two or more areas are aligned in an order of crack occurrence timings.

## Patentansprüche

1. Luftreifen mit:
einem Verschlechterungsindikator (7), der durch Anordnen von zwei oder mehr Flächen in einer Reihe ausgebildet ist, wobei
die Zeit, die vor dem Auftreten eines Risses aufgrund eines Umweltfaktors und/oder eines Benutzungsfaktors vergeht, unter zwei oder mehr Flächen verschieden ist, und
der Verschlechterungsindikator (7) in einem freiliegenden Abschnitt, abgesehen von einer Laufflächenoberfläche des Reifens, vorgesehen ist, **dadurch gekennzeichnet, dass**
der Verschlechterungsindikator (7) durch in einer Reihe Anordnen von zwei oder mehr Gummizusammensetzungsmaterialien mit verschiedenen Gummizusammensetzungen ausgebildet ist, welche in einer Umfangsrichtung des Reifens kontinuierlich sind.

2. Luftreifen nach Anspruch 1, bei dem der Verschlechterungsindikator (7) durch kontinuierlich in der Umfangsrichtung des Reifens in einer Reihe Anordnen von zwei oder mehr konkaven Abschnitten (8) ausgebildet ist, welche verschiedene Krümmungsradien aufweisen.

3. Luftreifen nach Anspruch 2, bei dem die zwei oder mehr konkaven Abschnitte mit verschiedenen Krümmungsradien so ausgebildet sind, dass sie Formen aufweisen, die jeweils erhalten werden, wenn man einen Kegel entlang einer Ebene parallel zu dessen Axialrichtung teilt.

4. Luftreifen mit:
einem Verschlechterungsindikator (7), der durch Anordnen von zwei oder mehr Flächen in einer Reihe ausgebildet ist, wobei
die Zeit, die vor dem Auftreten eines Risses aufgrund eines Umweltfaktors und/oder eines Benutzungsfaktors vergeht, unter zwei oder mehr Flächen verschieden ist, und
der Verschlechterungsindikator (7) in einem freiliegenden Abschnitt, abgesehen von einer Laufflächenoberfläche des Reifens, vorgesehen ist, **dadurch gekennzeichnet, dass**
der Verschlechterungsindikator (7) aus einem konkaven Abschnitt (8) mit der Gestalt eines Kegels ausgebildet ist, der in einer Ebene parallel zu dessen Axialrichtung geteilt ist, und
die zwei oder mehr Flächen in einer Umfangsrichtung des Reifens in einer Reihe entlang der Axialrichtung angeordnet sind, sodass sie verschiedene Krümmungsradien aufweisen.

5. Luftreifen mit:
einem Verschlechterungsindikator (7), der durch Anordnen von zwei oder mehr Flächen in einer Reihe ausgebildet ist, wobei
die Zeit vor dem Auftreten eines Risses aufgrund eines Umweltfaktors und/oder eines Benutzungsfaktors unter zwei oder mehr Flächen verschieden ist, und
der Verschlechterungsindikator (7) in einem freiliegenden Abschnitt, abgesehen von einer Laufflächenoberfläche des Reifens, vorgesehen ist, **dadurch gekennzeichnet, dass**
die Flächen des Verschlechterungsindikators (7) durch in einer Reihe Anordnen von zwei oder mehr unabhängigen konkaven Abschnitten (8) mit ungefähr identischen Durchmessern zueinander, aber mit verschiedenen Tiefen und verschiedenen Krümmungsradien an den Unterseiten der konkaven Abschnitte, mit Unterbrechungen in der Umfangsrichtung des Reifens auf der Oberfläche des Reifens ausgebildet sind.

6. Luftreifen nach Anspruch 4 oder 5, bei dem die Flächen des Verschlechterungsindikators (7) aus zwei oder mehr Gummizusammensetzungsmaterialien mit verschiedenen Gummizusammensetzungen ausgebildet sind.

7. Luftreifen nach Anspruch 2 oder 5, bei dem zwei der mehr konkave Abschnitte (8) mit verschiedenen Krümmungsradien durch Anordnen von Teilen von wenigstens zwei Arten aus einer Kugel und einem Ellipsoid ausgebildet sind.

8. Luftreifen nach einem der Ansprüche 1 bis 7, bei dem wenigstens einer unter dem Umweltfaktor und dem Benutzungsfaktor aus Wärme, Licht, Sauerstoff, Ozon und Verformung ausgewählt ist.

9. Luftreifen nach einem der Ansprüche 1 bis 8, bei dem der Verschlechterungsindikator (7) in einer Fläche der maximalen Breite des Reifens vorgesehen ist.

10. Luftreifen nach einem der Ansprüche 1 bis 9, bei dem die zwei oder mehr Flächen in einer Ordnung der Zeitpunkte des Auftretens von Rissen angeordnet sind.

## Revendications

1. Bandage pneumatique comprenant:
un indicateur de détérioration (7) formé en agençant deux ou plusieurs zones en une rangée, où
le temps qu'il faut avant une survenue de craquelure due à un facteur environnemental et/ou un facteur d'utilisation est différent dans deux ou plusieurs zones, et
l'indicateur de détérioration (7) est disposé dans une portion exposée, autre qu'une surface de bande de roulement, du bandage, **caractérisé en ce que**
l'indicateur de détérioration (7) est formé en agençant, en une rangée, deux ou plusieurs matériaux de composition de caoutchouc ayant des compositions de caoutchouc différentes continuellement dans une direction circonférentielle du bandage.

2. Bandage pneumatique selon la revendication 1, dans lequel l'indicateur de détérioration (7) est formé en agençant, en une rangée, deux ou plusieurs portions concaves (8) ayant des rayons de courbure différents continuellement dans la direction circonférentielle du bandage.

3. Bandage pneumatique selon la revendication 2, où les deux ou plusieurs portions concaves ayant des rayons de courbure différents sont réalisées en des formes, chacune obtenue en utilisant un cône à un plan parallèle à sa direction axiale.

4. Bandage pneumatique comprenant:
un indicateur de détérioration (7) formé en agençant deux ou plusieurs zones en une rangée, où le temps qu'il faut avant une survenue de craquelure due à un facteur environnemental et/ou un facteur d'utilisation est différent dans les deux ou plusieurs zones, et
l'indicateur de détérioration (7) est disposé dans une portion exposée, autre qu'une surface de bande de roulement du bandage, **caractérisé en ce que** l'indicateur de détérioration (7) est formé par une portion concave (8) ayant une forme conique qui est divisée à un plan parallèle à sa direction axiale, et
les deux ou plusieurs zones sont agencées dans une direction circonférentielle du bandage en une rangée le long de ladite direction axiale pour avoir des rayons de courbure différents.

5. Bandage pneumatique comprenant:
un indicateur de détérioration (7) formé en agençant deux ou plusieurs zones en une rangée, où
le temps qu'il faut avant une survenue de craquelure due à un facteur environnemental et/ou un facteur d'utilisation est différent dans les deux ou plusieurs zones, et
l'indicateur de détérioration (7) est disposé dans une portion exposée, autre qu'une surface de bande de roulement, du bandage, **caractérisé en ce que**
les zones de l'indicateur de détérioration (7) sont formées en agençant, en une rangée, deux ou plusieurs portions concaves indépendantes (8) ayant des diamètres approximativement identiques les unes aux autres sur la surface du bandage, mais des profondeurs différentes et des rayons de courbure différents aux fonds des portions concaves, d'une manière intermittente dans la direction circonférentielle du bandage.

6. Bandage pneumatique selon la revendication 4 ou 5, où les zones de l'indicateur de détérioration (7) sont formées par deux ou plusieurs matériaux de composition de caoutchouc ayant des compositions de caoutchouc différentes.

7. Bandage pneumatique selon la revendication 2 ou 5, où les deux ou plusieurs portions concaves (8) ayant des rayons de courbure différents sont formées en alignant des parties d'au moins deux types parmi un quelconque d'une sphère et d'un ellipsoïde.

8. Bandage pneumatique selon l'une quelconque des revendications 1 à 7, où au moins un parmi le facteur environnemental et le facteur d'utilisation est un sélectionné parmi la chaleur, la lumière, l'oxygène, l'ozone et la distorsion.

9. Bandage pneumatique selon l'une quelconque des revendications 1 à 8, où l'indicateur de détérioration (7) est disposé dans une zone de largeur maximale du bandage.

10. Bandage pneumatique selon l'une quelconque des revendications 1 à 9, où les deux ou plusieurs zones sont alignées selon l'ordre des temps de survenue des craquelures.
